# FASCICULE DE BREVET EUROPEEN

(11) **EP 3 410 514 B1**
(45) Date de publication et mention de la délivrance du brevet: **04.12.2019**
(21) Numéro de dépôt: 18174981.3
(22) Date de dépôt: 30.05.2018
(51) Int. Cl.: H01M 2/12, H01M 2/30, H01M 10/05, F16K 17/04

(54) **TRAVERSEE FORMANT BORNE POUR ACCUMULATEUR ELECTROCHIMIQUE METAL-ION, INTEGRANT UNE SOUPAPE DE LIBERATION DES GAZ, ACCUMULATEUR ASSOCIE**
POLDURCHFÜHRUNG ALS ANSCHLUSSKLEMME MIT GASAUSLASSVENTIL FÜR EINEN ELEKTROCHEMISCHEN METALL-IONEN-AKKU, SOWIE ENTSPRECHENDER AKKU
BUSHING FORMING A TERMINAL FOR A METAL-ION STORAGE CELL, INCLUDING A GAS RELEASE VALVE, ASSOCIATED CELL

(30) Priorité: 02.06.2017 FR 1754918
(43) Date de publication de la demande: 05.12.2018
(73) Titulaire: Commissariat à l'Energie Atomique et aux Energies Alternatives, 75015 Paris (FR)
(72) Inventeur: DEWULF, Frédéric, 38500 VOIRON (FR)
(74) Mandataire: Nony

(56) Documents cités:
- EP-A2- 1 233 463
- DE-A1-102013 203 037
- US-A- 5 258 242
- US-A- 5 879 831

## Description

### Domaine technique

La présente invention concerne le domaine des générateurs électrochimiques au métal-ion, en particulier au lithium-ion, qui fonctionnent selon le principe d'insertion ou de désinsertion, ou autrement dit intercalation-désintercalation, de ions métalliques dans au moins une électrode.

L'invention se rapporte notamment aux accumulateurs électrochimiques au métal-ion de forte capacité, typiquement supérieur à 10 Ampère-heure (Ah), et présentant une aptitude au passage de forts courants, typiquement supérieurs à 250 A.

L'invention concerne plus particulièrement la réalisation d'un dispositif de libération sous la forme d'une soupape des gaz générés au cours de fonctionnement de l'accumulateur.

Bien que décrite en référence à un accumulateur Lithium-ion, l'invention s'applique à tout accumulateur électrochimique métal-ion, c'est-à-dire également Sodium-ion, Magnésium-ion, Aluminium-ion...

### Art antérieur

Une batterie ou accumulateur lithium-ion comporte usuellement au moins une cellule électrochimique constituée d'un constituant d'électrolyte entre une électrode positive ou cathode et une électrode négative ou anode, un collecteur de courant connecté à la cathode, un collecteur de courant connecté à l' anode et enfin, un emballage agencé pour contenir la cellule électrochimique avec étanchéité tout en étant traversé par une partie des collecteurs de courant.

Le constituant d'électrolyte peut être de forme solide, liquide ou gel. Sous cette dernière forme, le constituant peut comprendre un séparateur en polymère ou en composite microporeux imbibé d'électrolyte (s) organique (s) ou de type liquide ionique qui permet le déplacement de l'ion Lithium de la cathode à l'anode pour une charge et inversement pour une décharge, ce qui génère le courant. L'électrolyte est en général un mélange de solvants organiques, par exemple des carbonates dans lesquels est ajouté un sel de lithium typiquement LiPF6.

L'électrode positive ou cathode est constituée de matériaux d'insertion du cation Lithium qui sont en général composite, comme LiFePO₄, LiCoO₂, LiNi₀.₃₃Mn_{0.33}Co_{0.33}O₂.

L'électrode négative ou anode est très souvent constituée de carbone graphite ou en Li₄TiO₅O₁₂ (matériau titanate), éventuellement également à base de silicium ou de composite formé à base de silicium.

Le collecteur de courant connecté à l'électrode positive est en général en aluminium.

Le collecteur de courant connecté à l'électrode négative est en général en cuivre, en cuivre nickelé ou en aluminium.

Une batterie ou accumulateur lithium-ion peut comporter bien évidemment une pluralité de cellules électrochimiques qui sont empilées les unes sur les autres.

Traditionnellement, une batterie ou accumulateur Li-ion utilise un couple de matériaux à l'anode et à la cathode lui permettant de fonctionner à un niveau de tension élevé, typiquement égal à 3,6 Volt.

Une batterie ou accumulateur Li-ion comporte un emballage rigide lorsque les applications visées sont contraignantes où l'on cherche une longue durée de vie, avec par exemple des pressions à supporter bien supérieures et un niveau d'étanchéité requis plus strict, typiquement inférieure à 10⁻⁸ mbar.l/s, ou dans des milieux à fortes contraintes comme le domaine aéronautique ou spatial.

Aussi, à ce jour un emballage rigide est constitué d'un boitier métallique, typiquement en acier inoxydable (inox 316L ou inox 304), en aluminium (Al 1050 ou Al 3003) ou en titane.

Actuellement, deux types de boitier rigide sont fabriqués.

Le premier type consiste en un boitier rigide constitué avec un fond usiné et un couvercle soudés entre eux sur leur périphérie par laser. Les collecteurs de courant sont constitués en partie par des fils métalliques ou pions. Le ou les pions est (sont) soudé par soudure électrique ou par ultrasons à la partie du collecteur de courant correspondant connectée elle-même à une des électrodes d'une cellule électrochimique ou d'un empilement de cellules électrochimiques. Pour réaliser l'isolation électrique entre le couvercle métallique du boitier et le pion métallique, une bille de verre enverre le pion en constituant ainsi ce qui est communément appelée une traversée verre-métal (TVM). En outre, pour réaliser l'étanchéité avec le couvercle du boitier, une bague autour de la bille de verre et en général dans le même métal que celui du boitier est soudée à ce dernier. Certaines configurations prévoient d'utiliser une seule TVM, le boitier constituant l'autre borne aussi appelé pôle de l'accumulateur.

Le deuxième type consiste également en un boitier rigide constitué avec un godet embouti et un couvercle soudés entre eux sur leur périphérie par laser. En revanche, les collecteurs de courant comprennent une traversée avec une partie faisant saillie sur le dessus du boitier et qui forme une borne aussi appelée pôle apparent de la batterie.

Les différents types de traversée sont exposées dans la demande de brevet FR 2989836, qui propose quant à elle une traversée formant borne 1 d'un accumulateur Li-ion, qui permet de faire passer des courants très élevés, typiquement supérieurs à 100A, avec des niveaux de tension moyenne inférieurs à celui traditionnellement utilisé égal à 3,6 Volt.

Par ailleurs, un problème connu dans les accumulateurs Li-ion est celui de la génération de gaz lors d'étape de formation électrique et au cours du fonctionnement des accumulateurs.

En effet, après le cycle de formation électrique de l'accumulateur, il a été constaté dans certains cas des déformations mécaniques du boitier de l'accumulateur. Ceci permet de penser qu'une génération de gaz s'est opérée au cours de ce cycle de formation électrique.

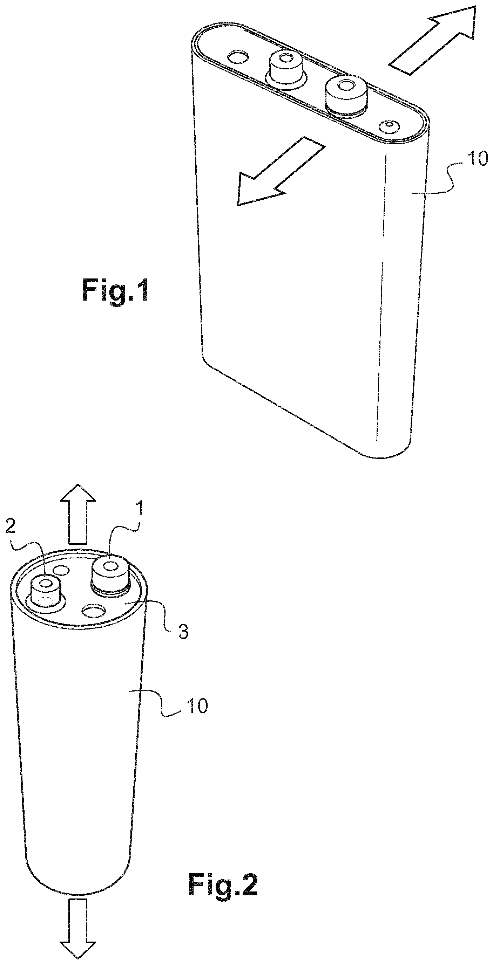

Typiquement pour un format d'accumulateur prismatique, on observe principalement un gonflement des grandes faces avec une augmentation de l'épaisseur résultante à la suite de la formation électrique. Ce gonflement est symbolisé par les flèches sur la figure 1 où les grandes faces du boitier 10 de forme prismatique se déforment plastiquement en s'écartant l'une de l'autre.

De même, pour un format d'accumulateur cylindrique de diamètre important, typiquement supérieur à 25-30 mm de diamètre, on peut constater une déformation du fond de l'accumulateur et/ou de le couvercle équipé des bornes formant les pôles positif et négatif, cette déformation pouvant atteindre une valeur de 1 à 2 mm, dans les pires cas. Cette déformation est symbolisée par les flèches sur la figure 2 où le fond et le couvercle 3 équipé d'une borne négative formant une traversée 1 et d'une borne positive 2 se déforment plastiquement. Cette déformation est la conséquence d'une montée en pression interne à l'accumulateur habituellement observée au cours du 1er cycle de formation électrique de l'accumulateur.

Les inventeurs ont déjà réalisés des essais de mesure de la pression interne au cours des premiers cycles de formation électrique d'un accumulateur Li-ion. Ces essais ont permis de mettre en évidence ce phénomène de montée en pression gazeuse à l'intérieur d'un accumulateur.

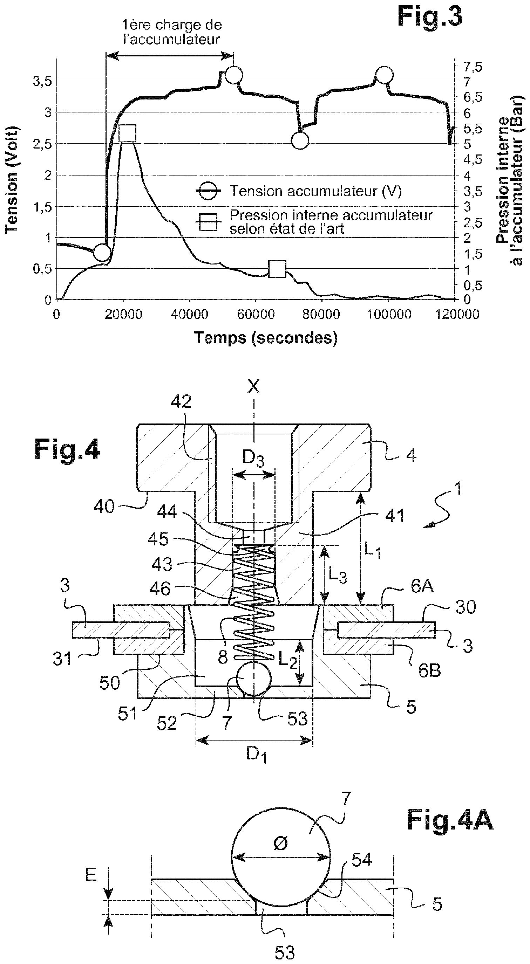

On a illustré en figure 3 sous la forme de graphes, le résultat des essais réalisés pour un accumulateur Li-ion de format cylindrique de type 50-125 avec une électrochimie de type LiFePO₄ / Graphite.

L'une des courbes présente l'enregistrement de la tension aux bornes de l'accumulateur au cours des phases de charge et de décharge tandis que la deuxième courbe montre l'évolution de la pression interne à l'accumulateur mesurée pendant les deux premiers cycles complets au cours de cette phase de formation électrique.

Il ressort de la deuxième courbe une montée en pression interne qui est soutenue pendant les trois premières heures environ du premier cycle de charge électrique, avec un pic de pression qui s'établit à une valeur de l'ordre de 5,4 bars.

On note qu'en parallèle l'activité électrochimique qui génère cette montée en pression se régule au-dessus de 3,0V.

A la vue de la partie droite de la deuxième courbe, on assiste à priori à un phénomène de recombinaison des gaz qui conduit à une redescente progressive de la pression interne en dessous de 1 bar et ceci de façon stabilisée dès le second cycle électrique de charge/décharge.

Avec le niveau de pression interne atteint, supérieur à 5 bars dans l'exemple, il a pu être constaté une déformée irréversible du fond du godet de boitier de l'accumulateur de l'ordre de +0,5 mm.

Or, cette plastification du fond du godet de l'accumulateur peut devenir problématique en particulier lorsqu'on souhaite réaliser un assemblage en modules constitués chacun de plusieurs accumulateurs, car les dimensions peuvent évoluer fortement, comme ici la hauteur totale d'un accumulateur.

On comprend bien ici que dans le cadre de l'exemple précité, il aurait été intéressant de pouvoir libérer les gaz générés au cours de la première étape de charge électrique, c'est-à-dire lors de la phase de montée en tension comprise dans l'exemple entre 0,5 V et 3,0V environ. En effet, une libération des gaz aurait permis d'éviter à la fois:
- de contraindre mécaniquement les parois du boitier de l'accumulateur, et donc d'engendrer une déformation irréversible de certains surfaces du boitier, et
- de stocker en interne de l'accumulateur, des gaz dont la composition n'est pas forcément avantageuse pour les performances électriques et le vieillissement de l'accumulateur.

Il est déjà connu différents dispositifs de libération des gaz générés à l'intérieur des accumulateurs électrochimiques, en cas de surpression, voir DE 102013203037 et US 5258242, par exemple.

Un premier type de dispositif, bien répandu en particulier pour les accumulateurs Li-ion de format cylindrique, notamment au format 18650, consiste à un affaiblissement par ligne de prédécoupe aussi appelée ligne de rupture d'une partie du boitier, plus particulièrement du couvercle. Cette ligne de rupture forme en général un disque qui est dimensionnée pour se percer au-delà d'une pression prédéterminée, ce qui permet de laisser échapper les gaz vers l'extérieur de l'accumulateur. Un tel dispositif à disque de rupture permet de faire chuter la pression interne jusqu'à l'atteinte d'un équilibre de pression avec la pression du milieu ambiant. L'inconvénient majeur d'un disque de rupture est qu'il peut être considéré comme « irréversible » puisque il ne peut y avoir pas continuité de fonctionnement de l'accumulateur une fois la rupture de la paroi du disque obtenue.

Un deuxième type de dispositif de libération des gaz en cas de surpression interne connu est celui habituellement intégré au couvercle d'accumulateur cylindrique dont l'électrochimie est de type Ni-MH ou Ni-Cd. Dans ce type de dispositif, une pièce en élastomère type EPDM, de forme cylindrique et pleine est centrée dans le capuchon qui se situe au-dessus du couvercle. Cette pièce cylindrique en élastomère est mise en compression entre la base du couvercle et le capuchon, ce qui permet d'assurer une étanchéité entre un passage au travers de la base couvercle et une ouverture formant un évent du côté du capuchon. Pour une pression définie, généralement comprise entre 3 et 6 bars, la pièce en élastomère va se comprimer encore, suffisamment pour laisser échapper progressivement les gaz interne à l'accumulateur. Après libération des gaz, la pression interne à l'accumulateur redescend à une valeur plus faible, de l'ordre de 2-3 bars, ce qui permet à la pièce élastomère de se remettre en position initiale. Le passage au travers du couvercle se trouve à nouveau obturé, l'accumulateur redevient étanche et les gaz ne peuvent plus s'échapper. L'avantage de ce deuxième dispositif est qu'il peut être considéré comme réversible dans la mesure où la continuité de fonctionnement peut être garantie après ouverture de la pièce en élastomère et ceci pendant toute la durée de vie de l'accumulateur. L'inconvénient de ce deuxième dispositif est qu'on ne peut l'appliquer à un accumulateur Li-ion à cause d'un problème d'incompatibilité chimique du matériau constitutif de la pièce en élastomère, notamment vis-à-vis des électrolytes usuellement employés à base de sel de lithium, de type LiPF₆, LiClO₄, ou encore LiTFSI.

En outre, les différents dispositifs de libération des gaz proposés peuvent impliquer un encombrement supplémentaire dans l'accumulateur.

Il existe donc un besoin d'améliorer la réalisation des dispositifs de libération des gaz pour accumulateur électrochimique métal-ion, notamment afin qu'ils puissent compatible avec l'électrochimie des matériaux de l'accumulateur, être réversibles, c'est-à-dire assurer une continuité de fonctionnement après libération des gaz, et compacts.

### Exposé de l'invention

Pour ce faire, l'invention concerne, sous l'un de ses aspects, une traversée formant borne pour accumulateur électrochimique métal-ion, réalisée à travers un orifice débouchant de part et d'autre d'une paroi comportant deux faces opposées, comportant:
- un moyen de fermeture, en appui contre le chanfrein d'au moins un passage débouchant formant un siège à l'intérieur de la traversée,
- un moyen de compression logé dans le conduit débouchant, le moyen de compression étant adapté pour maintenir appuyé le moyen de fermeture contre son siège selon une surface continue périphérique, jusqu'à une pression prédéterminée des gaz régnant à l'intérieur de l'accumulateur, au-delà de laquelle ceux-ci peuvent s'échapper vers l'extérieur de l'accumulateur au travers du passage et du conduit débouchant.

Selon une variante de réalisation, la traversée comporte :
- deux rondelles électriquement isolantes, comportant chacune une portion d'appui surfacique en appui avec pression contre l'une des faces de la paroi et une portion de guidage en saillie par rapport à la portion d'appui et en contact avec le bord de l'orifice,
- deux pièces électriquement conductrices, une portion de la pièce mâle étant ajustée serrée dans une portion alésée de la pièce femelle, chacune des pièces conductrices comportant une portion d'appui en appui surfacique avec pression contre une portion d'appui des rondelles, le fond de la portion alésée étant percé du passage débouchant avec un chanfrein, la portion ajustée de la pièce mâle comprenant au moins un conduit débouchant à la fois à l'extérieur de l'accumulateur et en regard du passage débouchant de la pièce femelle.

Selon mode de réalisation avantageux, le moyen de compression est un ressort de compression.

Selon un autre mode de réalisation avantageux, le moyen de fermeture est une bille, le moyen de compression étant adapté d'une part pour laisser passer l'extrémité d'un outil de sorte à permettre une déformation plastique initiale de la bille par pressage contre son siège et d'autre part pour maintenir appuyée la bille déformée contre son siège jusqu'à la pression prédéterminée des gaz régnant à l'intérieur de l'accumulateur, au-delà de laquelle ceux-ci peuvent s'échapper vers l'extérieur de l'accumulateur. La déformation plastique initiale permet ainsi de garantir à coup sûr une parfaite étanchéité, typiquement à un niveau inférieur à 10⁻⁸ mbar.l/s pour de l'hélium.

Par «traversée», on précise qu'on entend le sens usuel, c'est-à-dire un dispositif servant à faire passer un élément conducteur électrique à travers une paroi et en isolant le conducteur de cette paroi. L'élément conducteur et la paroi traversée sont de polarités différentes et sont donc isolés électriquement par des pièces isolantes électriquement qui peuvent former également un joint d'étanchéité.

Ainsi, les inventeurs ont pensé de manière judicieuse à implanter un dispositif de libération des gaz de l'accumulateur, de préférence formé par un clapet à bille avantageusement déformée plastiquement, au sein même d'une traversée formant une des bornes de l'accumulateur, cette traversée étant par ailleurs de par sa constitution, robuste mécaniquement.

Le clapet constitue en quelque sorte une soupape à déplacement réversible permettant de laisser échapper les gaz générés en cours du fonctionnement de l'accumulateur, en cas de surpression interne.

L'intégration de la soupape selon l'invention est avantageuse car elle se fait dans un encombrement sensiblement équivalent à celui d'une traversée formant une borne étanche de paroi dans les accumulateurs métal-ion, telles que celles décrites dans les demandes de brevet FR2989836 et celle déposée en France, au nom de la déposante, le 7 septembre 2016 sous le n°FR16 58288.

Autrement dit, le dispositif de libération des gaz, formé par le clapet, de préférence à bille, ne modifie pas la géométrie de l'accumulateur, puisque l'intégration du moyen de fermeture, tel que la bille et de son moyen de compression se fait dans l'encombrement dédié à la réalisation d'une des bornes de l'accumulateur.

En fonctionnement nominal, la parfaite étanchéité de l'accumulateur est assurée d'une part entre la pièce femelle et la paroi de l'accumulateur qui supporte la traversée par le biais de la rondelle isolante inférieure et d'autre part par le moyen de fermeture, tel que la bille, éventuellement ayant subi une déformation plastique, maintenu en appui par le moyen de compression, contre son siège réalisé autour du trou débouchant de la pièce femelle

Par « parfaite étanchéité », on entend une étanchéité selon un niveau parmi les plus stricts requis, typiquement inférieur à 10⁻⁸ mbar.l/s pour de l'hélium.

Les matériaux constitutifs du moyen de fermeture, telle que la bille et du moyen de compression selon l'invention doivent respectés un certain nombre de contraintes.

Ainsi, le matériau constitutif du moyen de fermeture (bille) doit :
- être compatible avec l'électrochimie employée dans l'accumulateur métal-ion et garantir une très bonne résistance chimique pour éviter d'une part, tout risque de corrosion et source potentielle de pollution pour l'intérieur de l'accumulateur et d'autre part, toute dégradation de sa surface par attaque chimique provenant des différents sels et solvants contenus dans l'électrolyte ou des gaz qui se forment en fonctionnement de l'accumulateur. En effet, une altération chimique de la surface de la bille pourrait remettre en cause l'étanchéité obtenue à l'interface entre la surface de bille et son siège, c'est-à-dire le profil du trou débouchant percé au travers de la base de la pièce femelle ;
- être compatible avec le matériau sélectionné pour la pièce femelle de la borne ;
- présenter des caractéristiques mécaniques plus faibles que celles du matériau utilisé pour la pièce femelle de la borne pour permettre en étape finale de l'assemblage de la traversée de réaliser une déformation plastique de la bille afin de garantir l'étanchéité à l'interface entre surface de bille et son siège, au niveau requis comme indiqué ci-dessus.

Selon une première variante, la pièce femelle est en un grade de cuivre Cu-Al, à l'état écroui type H14 tandis que la bille est en un grade de cuivre Cu-Al, à l'état 0.

Selon une deuxième variante, la pièce femelle est en un alliage d'aluminium de grade 1050 à l'état écroui type H14, H16 ou H18, tandis que la bille est en un grade en aluminium à l'état recuit, type 0. Un grade 1050 est parfaitement compatible avec les matériaux qui peuvent constituer le cœur électrochimique d'un accumulateur métal-ion, comprenant les matériaux d'insertion actifs à base de silicium, titanate ou sodium, un électrolyte à base de LiPF6 pour un accumulateur Li-ion... De plus, ce grade d'aluminium est similaire à celui usuellement utilisé pour les collecteurs de courant et feuillard d'électrode à base d'aluminium.

Le matériau constitutif du moyen de compression doit quant à lui :
- permettre de restituer un effort sous compression correspondant au niveau de pression visé, typiquement supérieur à 2 bars de pression, pour conserver une étanchéité à l'interface entre la surface du moyen de fermeture, tel que la bille et le siège (chanfrein);
- être compatible avec l'électrochimie employée dans l'accumulateur métal-ion et garantir une très bonne résistance chimique pour éviter toute dégradation de sa surface par attaque chimique provenant des différents sels et solvants contenus dans l'électrolyte ou des gaz qui se forment en fonctionnement de l'accumulateur.

De préférence, le moyen de compression, tel que le ressort de compression, est en acier inoxydable de grade AISI 316 ou 316L, ou encore de grade AISI 304 ou 304L.

La pièce mâle peut être avantageusement en alliage à base de cuivre, de préférence en cuivre électrolytique CuA1 ou en cuivre nickelé, ou en alliage à base d'aluminium, de préférence un grade 5754. Le cuivre nickelé présente comme avantage d'être de même nature chimique que celle définie pour une borne négative en cuivre classique, ce qui peut permettre de conserver une interface identique vis-à-vis d'un utilisateur et ce même si l'électrochimie de l'accumulateur est différente d'une électrochimie classique. Un grade 5754 possède de très bonnes caractéristiques mécaniques et reste intègre lorsqu'une pression est appliquée sur sa surface, notamment lors du sertissage de la pièce mâle dans la pièce femelle.

De préférence, le chanfrein sur lequel le moyen de fermeture vient s'appuyer est un chanfrein conique, de préférence à 45°.

De préférence encore, le conduit débouchant comprend un trou taraudé central de la pièce mâle.

Selon une variante avantageuse, l'ajustement serré de la portion ajustée de la pièce femelle dans la portion alésée de la pièce femelle est un ajustement de type N9p7, en particulier pour un diamètre d'alésage de la portion alésée de l'ordre de 6mm. Il est précisé ici que l'ajustement considéré N9p7 est celui selon le système ISO d'ajustements.

Les avantages d'une traversée intégrant une soupape de libération des gaz, avec bille selon l'invention, sont nombreux parmi lesquels on peut citer :
- la possibilité de procéder à un dégazage de l'accumulateur à basse pression à tout moment en cas d'augmentation de sa pression interne et dans différents situations comme à la formation électrique, en cas d'échauffements internes pouvant générer du gaz, en cas d'utilisation en conditions abusives, par exemple avec une température externe trop élevée, typiquement supérieure à +70°C, en cas de courants de charge ou de décharge trop élevés, en cas de court-circuit externe ;
- le fait d'être une solution réversible, c'est-à-dire qui assure la continuité de fonctionnement de l'accumulateur après libération de gaz : lorsque la pression interne redescend, typiquement en dessous de 2 bars, la fuite de gaz et/ou de liquide provenant de l'intérieur de l'accumulateur cesse par la fermeture du trou débouchant dans la pièce femelle de la traversée grâce au moyen de fermeture, tel que la bille, jusqu'à une éventuelle remontée de la pression interne si la cause à l'origine de la génération de gaz est toujours présente ;
- la limitation des volumes de gaz qui peuvent s'échapper de l'accumulateur de par l'ouverture du passage débouchant, à basse pression.
- la compatibilité avec toute électrochimie chimie d'accumulateur métal-ion;
- le fait d'éviter des contraintes supplémentaires de fabrication. Ainsi, le dispositif formant une soupape d'évacuation des gaz selon l'invention est opérationnel dès la formation électrique de l'accumulateur. Ce dispositif selon l'invention étant intégré dans une borne de l'accumulateur qui est complètement fermé, il n'y a donc pas lieu de réaliser l'étape de formation électrique de l'accumulateur en laissant le boitier de ce dernier ouvert pour libérer toute production de gaz puis en réalisant une fermeture finale de l'accumulateur après la formation électrique ;
- la réalisation de l'assemblage de l'accumulateur selon l'invention avec sa fermeture étanche peut être réalisée en salle d'assemblage anhydre, tandis que l'opération de formation électrique et l'étape finale post-formation peuvent s'effectuer en dehors de la salle anhydre.

L'invention concerne également, sous encore un autre aspect, une batterie ou accumulateur métal-ion, comportant un boitier avec un couvercle à travers lequel une traversée telle que décrite précédemment est réalisée.

Selon une caractéristique, la pièce mâle est de type filetée intérieurement et fait saillie vers l'extérieur du boitier.

Le couvercle peut être en aluminium, tel que l'aluminium 1050 ou 3003.

Selon une configuration avantageuse, la pièce femelle de la traversée est en alliage d'aluminium et soudée à un collecteur de courant à base d'aluminium lui-même soudé à un feuillard d'électrode à base d'aluminium supportant un matériau actif d'insertion d'ions métal, de préférence choisi parmi un matériau à base de titanate, tel que l'oxyde de titanate de lithium Li₄TiO₅O₁₂, un matériau à base de silicium, un matériau à base de sodium.

Selon une autre configuration avantageuse, la pièce femelle de la traversée est à base de cuivre Cu-Al et soudée à un collecteur de courant à base de cuivre lui-même soudé à un feuillard d'électrode à base de cuivre supportant un matériau actif d'insertion d'ions métal, de préférence choisi parmi un matériau à base de titanate, tel que l'oxyde de titanate de lithium Li₄TiO₅O₁₂, un matériau à base de silicium, un matériau à base de sodium.

L'invention concerne enfin un procédé de réalisation d'une traversée telle que décrite précédemment, selon lequel on réalise les étapes suivantes :
a/ insertion à travers l'orifice, depuis chacune des deux faces opposées de la paroi, d'une des portions de guidage des rondelles, de sorte qu'elles soient en appui contre le bord de l'orifice de la paroi,
b/ insertion, depuis une face de la paroi, de la pièce femelle en aluminium dans une des rondelles;
c/ logement du moyen de fermeture dans l'axe du passage débouchant à l'intérieur de la portion alésée de la pièce femelle, de sorte qu'il vienne se caler en appui surfacique sur le chanfrein en extrémité du passage débouchant;
d/ logement du moyen de compression dans une partie du conduit débouchant de la pièce mâle formant un logement, de sorte que l'une des extrémités du moyen de compression est en butée ou maintenue au fond du logement tandis que l'autre des extrémités fait saillie au-delà de la portion à ajuster de la pièce mâle;
e/ emmanchement à force, depuis la face opposée de la paroi, de la pièce mâle, de sorte que la portion ajustée de la pièce mâle soit en butée contre le fond de la portion alésée de la pièce femelle et que chacune des portions d'appui des pièces mâle et femelle est en appui surfacique avec pression contre une portion d'appui des rondelles elle-même guidée contre le bord de l'orifice.

L'emmanchement selon l'étape e/ est de préférence réalisé sous presse avec un effort supérieur ou égal à 1 tonne-force de sorte à obtenir un ajustement de type N9p7 entre portion ajustée de pièce mâle et portion alésée de pièce femelle, en particulier pour un diamètre d'alésage de la portion alésée de la pièce femelle de l'ordre de 6mm.

Selon un mode de réalisation avantageux, après l'étape e/, le procédé comprend les étapes suivantes :
f/ ensemble des étapes d'assemblage de l'accumulateur et de son boitier, comprenant :
   f1/ insertion à l'intérieur d'une enveloppe latérale de boitier, d'un faisceau électrochimique comprenant au moins une cellule enroulée sur elle-même, chaque cellule étant constitué d'une cathode, d'une anode et d'un film-séparateur intercalé entre anode-cathode ;
   f2/ réalisation des connexions électrique d'une part entre une extrémité du faisceau électrochimique et le boitier de l'accumulateur correspondant à une des polarités, et d'autre part entre l'autre extrémité du faisceau et la traversée ;
   f3/ fermeture étanche du boitier de l'accumulateur ;
   f4/ remplissage de l'intérieur de l'accumulateur avec un électrolyte liquide ou gel par un trou de remplissage dans le boitier de l'accumulateur puis fermeture étanche du trou de remplissage ;
g/ branchement électrique des bornes positive et négative de l'accumulateur afin de réaliser sa formation électrique.
   Avantageusement, le moyen de fermeture étant une bille, le procédé comprend, une fois l'étape g/ de formation électrique de l'accumulateur achevée, l'étape suivante :
h/ insertion depuis l'extérieur de l'accumulateur dans le conduit débouchant de la pièce mâle d'un outil de pressage au travers du moyen de compression de sorte à déformer plastiquement la bille en appui contre son siège.

### Description détaillée

D'autres avantages et caractéristiques de l'invention ressortiront mieux à la lecture de la description détaillée d'exemples de mise en œuvre de l'invention faite à titre illustratif et non limitatif en référence aux figures suivantes parmi lesquelles :
- la figure 1 est une vue en perspective d'un accumulateur Li-ion à géométrie cylindrique selon un exemple de l'état de l'art;
- la figure 2 est une vue en perspective d'un accumulateur Li-ion à géométrie prismatique selon un autre exemple de l'état de l'art;
- la figure 3 illustre sous forme de courbes, le résultat d'essais réalisés pour un accumulateur Li-ion selon l'état de l'art de format cylindrique de type 50-125 avec une électrochimie de type LiFePO₄ / Graphite ;
- la figure 4 est une vue en coupe axiale et en éclaté d'une traversée formant borne d'un accumulateur métal-ion au travers du couvercle du boitier, la traversée intégrant un dispositif de libération des gaz selon l'invention;
- la figure 4A est une vue de détail de la figure 4 montrant le positionnement de la bille du dispositif de libération des gaz, sur son siège ;
- les figures 5A, 5B et 5C sont des vues en coupe axiale montrant les différentes étapes de réalisation d'une traversée selon l'invention intégrant un dispositif de libération des gaz ;
- la figure 6 est une vue en coupe axiale de la traversée formant borne d'un accumulateur métal-ion selon l'invention obtenue à l'issue de l'étape de déformation plastique de la bille de la figure 5C;
- les figures 7A et 7B sont des vues de détail en coupe axiale de la bille du dispositif de libération des gaz, telle qu'elle est positionnée sur son siège, respectivement avant et après l'étape de déformation plastique de la bille de la figure 5C;
- les figures 8A et 8B sont des vues en coupe axiale de deux variantes de réalisation d'un outil de pressage pour mettre en œuvre l'étape de déformation plastique de la bille de la figure 5C ;
- la figure 9 illustre sous forme de courbes, le résultat d'essais réalisés pour un accumulateur Li-ion selon l'invention de format cylindrique de type 50-125 avec une électrochimie de type LiFePO4/Graphite.

Les figures 1 à 3 sont relatives à des accumulateurs Li-ion selon l'état de l'art. Ces figures 1 à 3 ont déjà été commentées en préambule et ne le sont donc pas plus ci-après.

Par souci de clarté, les mêmes références désignant les mêmes éléments de traversées selon l'état de l'art et selon l'invention sont utilisées pour toutes les figures 1 à 9B.

Dans l'ensemble de la présente demande, les termes « inférieur », « supérieur », « bas », « haut », « dessous » et « dessus » sont à comprendre par référence par rapport à un boitier d'accumulateur métal-ion positionné à la verticale avec son couvercle sur le dessus et la traversée faisant saillie à l'extérieur du boitier vers le haut.

On précise que, par souci de clarté, le couvercle 3 du boitier d'accumulateur au travers duquel la traversée 1 selon l'invention est réalisé, ainsi que les rondelles 6A, 6B assurant l'étanchéité ne sont représentées qu'en figure 4. Il va de soi que, bien que non montrés, ces éléments existent pour l'ensemble des autres vues de traversée selon l'invention.

On a représenté en figure 4, un premier exemple de traversée formant borne 1 d'un accumulateur métal-ion intégrant un dispositif de libération des gaz selon l'invention.

La traversée 1 selon l'invention est réalisée à travers un orifice 32 débouchant de part et d'autre d'un couvercle 3 d'un boitier d'accumulateur métal-ion. Ce couvercle comportant deux faces opposées 30, 31. Le couvercle 3 peut être typiquement en aluminium 1050 ou 3003 dont le coefficient de résistivité électrique et de l'ordre de 2,6 µοhm.cm.

La traversée 1 s'étend selon un axe X parallèle à l'axe du boitier de l'accumulateur Li-ion.

La traversée 1 selon l'invention comporte une pièce mâle 4 ajustée serrée dans une pièce femelle 5. Les pièces mâle 4 et femelle 5 représentées sont électriquement conductrices: autrement dit, elles ont un faible coefficient de résistivité électrique, typiquement compris entre 1,7 et 1,9 µohm.cm. La pièce mâle 4 peut être avantageusement en aluminium 5754 ou en cuivre électrolytique CuAl, avec de préférence un revêtement en nickel. La pièce femelle 5 peut être avantageusement réalisée en aluminium 1050 ou en cuivre électrolytique CuA1, avec de préférence un revêtement en nickel.

Chacune des pièces mâle 4 et femelle 5 comporte une portion d'appui 40, 50, qui vient en appui surfacique avec pression contre respectivement une rondelle supérieure 6A et une rondelle inférieur 6B. Les rondelles 6A, 6B représentées ont un coefficient de résistivité électrique élevé, supérieur à 1.10¹⁵ µοhm.cm. Elles peuvent être en polyéthérimide PEI. Chaque rondelle comportant une portion d'appui en appui directe avec pression contre l'une des portions d'appui 40, 50 des rondelles et une portion de guidage en saillie par rapport à la portion d'appui. Les portions de guidage guident et centre la pièce femelle 5 dans l'orifice du couvercle.

La pièce mâle 4 comprend une portion cylindrique 41 qui est ajustée serrée dans le trou alésé 51 de la pièce femelle 5.

La hauteur L1 de la portion cylindrique 41 est déterminée pour garantir au moins une hauteur minimale d'emmanchement entre portion cylindrique 41 et trou alésé 51. Typiquement, la hauteur L1 est supérieure à 2mm.

La hauteur L2 du trou alésé 51 est déterminée pour garantir au moins une hauteur minimale d'emmanchement entre portion cylindrique 41 et trou alésé 51. Typiquement, la hauteur L2 est supérieure à 2mm.

De préférence, le diamètre extérieur de la portion cylindrique 41 et celui intérieur D1 du trou alésé 51 de façon à satisfaire un emmanchement sous presse avec un effort supérieur ou égal à 1 tonne-force de cette partie cylindrique 41 dans le trou alésé 51 de la pièce femelle 5. Typiquement, on définit un ajustement de type N9p7 entre ces deux portions cylindriques 41, 51. Le montage des pièces mâle 4 et femelle 5 et des rondelles 6A et B assure une parfaite étanchéité au niveau de l'orifice du couvercle 3.

Selon l'invention, la borne 1 intègre un dispositif de libération des gaz en cas de surpression interne à l'accumulateur.

Ce dispositif comprend un ensemble de perçages qui est réalisé dans les deux pièces mâle 4 et femelle 5 au travers desquels des gaz provenant de l'intérieur de l'accumulateur sont susceptibles de passer pour s'échapper vers l'extérieur de l'accumulateur, ainsi qu'une bille 7 et un ressort de compression 8.

Le diamètre de bille 7 est supérieur à la fois à celui extérieur de son siège 54 ainsi qu'au diamètre extérieur du ressort de compression 8.

Le ressort de compression 8, à l'état comprimé, va permettre de maintenir la bille 7 sur son siège 54 selon une ligne continue sur tout le pourtour de ce dernier de sorte à obtenir une parfaite étanchéité entre l'intérieur et l'extérieur de l'accumulateur, sous l'effort du ressort 8 typiquement supérieur à un équivalent force de 2 bars de pression au travers du trou débouchant 53 au-dessus duquel la bille 7 est positionnée.

Le niveau de parfaite étanchéité que l'on atteint comme expliqué ci-après, est typiquement inférieur à 10⁻⁸ mbar.l/s sous hélium, c'est-à-dire équivalent à celui de l'ensemble du boitier de l'accumulateur métal-ion, en particulier autour de l'orifice 32 du couvercle 3 au niveau des rondelles 6A, 6B.

Plus précisément, la pièce mâle 4 comprend un logement 43 destiné à loger le ressort de compression 8. Ce logement 43 est relié au trou fileté intérieurement 42, typiquement selon un diamètre de type M5 ou M6, par un passage débouchant 44.

De préférence, un rétreint 45 est réalisé en extrémité supérieure du logement 43. Ce rétreint 45 permet de maintenir en position le ressort 8 après sa mise en place dans la pièce mâle 4.

Ce rétreint 45 peut être réalisé soit par usinage, soit par déplacement de matière de manière le long de la paroi de l'alésage du logement 43 de façon à former une ligne continue ou partiellement des surépaisseurs, de type cliquets positionnés par nombre de trois à 120° ou nombre de quatre à 90°.

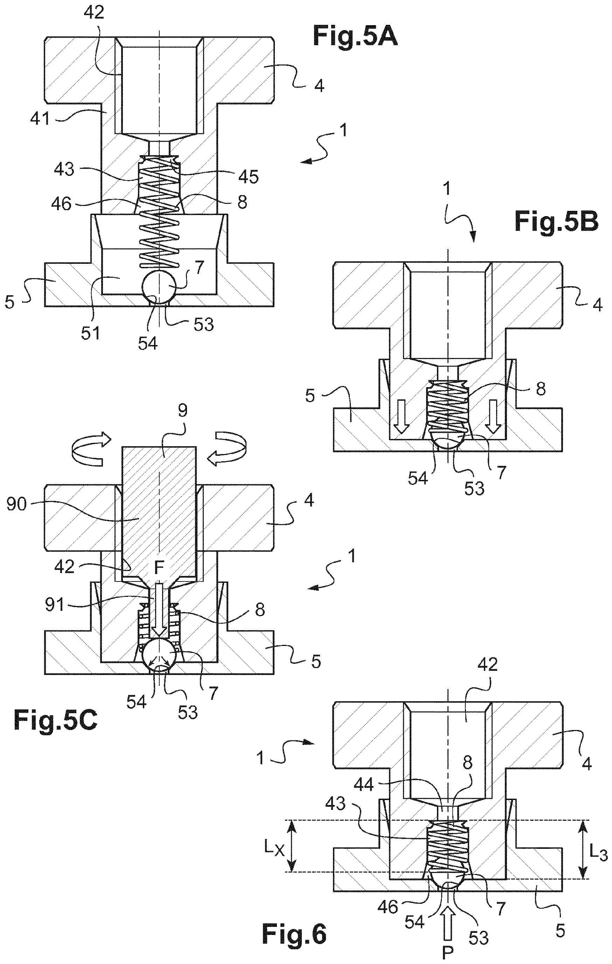

La pièce femelle 5 quant à elle est percée dans son fond 52 en bout du trou alésé 51 d'un passage débouchant 53 dont l'extrémité 54 forme le siège de la bille 7 et qui, comme montré en figure 6, est en regard du logement 43 du ressort 8.

Ainsi, par construction, en l'absence d'obturation par la bille 7 sous l'effort de pression du ressort 8, le trou fileté 42, le logement 43, les passages débouchant 44 et 53 communiquent entre eux de sorte à permettre le passage des gaz depuis l'intérieur de l'accumulateur vers l'extérieur au travers des pièces mâle 4 et 5 de la traversée 1.

Le siège 54 de la bille 7 est avantageusement constitué par un chanfrein conique, typiquement à environ 45°, ce qui permet outre la fonction d'étanchéité recherchée comme évoqué ci-avant, de permettre à la bille 7 de se positionner toute seule selon l'axe X du passage 53 et de la traversée 1 lors de son étape de mise en place.

De préférence, le diamètre intérieur D3 du logement 43 du ressort 8 est défini de façon à être supérieur de l'ordre de 10% au diamètre extérieur du ressort 8. On évite ainsi tout frottement et éventuellement coincement à la mise en compression du ressort 8.

De préférence, la hauteur L3 du logement 43 du ressort 8 est définie de à ce que, lorsque la pièce mâle 4 est ajustée serrée dans la pièce femelle 5 avec le bout de la portion cylindrique 41 en butée contre le fond 52 du trou alésé 51, le taux de compression du ressort 8 corresponde au niveau d'effort à appliquer sur la bille pour contenir une pression d'ouverture que l'on définira comprise entre deux valeurs de pression respectivement basse P1 et haute P2 pour l'échappement des gaz depuis l'intérieur de l'accumulateur vers l'extérieur.

Afin d'être compatible avec les dimensions et encombrement usuels et souhaités pour une traversée 1 d'accumulateur métal-ion, la bille 7 présente avantageusement de faibles dimensions, typiquement un diamètre extérieur compris entre 1,6 et 3mm.

De même, la bille 7 est positionnée sur un chanfrein 54 du passage débouchant 53 dont le diamètre est de préférence compris entre 1 et 2 mm.

Lorsque la pièce femelle 5 est en cuivre Cu-Al revêtue de nickel, la bille 7 est de préférence également en cuivre Cu-Al, de préférence à minimum 99,9 % de cuivre.

Lorsque la pièce femelle 5 est en aluminium 1050 revêtue de nickel, la bille 7 est en aluminium de série 1000, comme par exemple en aluminium 1050, à 99,5% minimum d'aluminium.

Comme expliqué par la suite, afin de garantir une étanchéité au niveau requis comme précité, au niveau du chanfrein 54 du trou débouchant 53, il est prévu avantageusement de réaliser une étape finale de déformation plastique de la bille 7 contre la pièce femelle 5, lors de l'assemblage de la traversée 1, qui sera décrit ci-après.

Aussi, pour satisfaire à ces contraintes de déformation plastique, lorsque la pièce femelle 5 de la borne est en cuivre Cu-Al revêtue de nickel, on peut faire la sélection avantageuse suivante :
- pour la pièce femelle 5, un grade de cuivre Cu-Al, à l'état écroui type H14 qui se traduit par une résistance à la rupture supérieure à 300N/mm² avec une limite élastique supérieure à 250N/mm² ;
- pour la bille 7, un grade de cuivre Cu-Al, à l'état 0 avec recuit qui se traduit par une résistance à la rupture supérieure à 200N/mm² avec une limite élastique maximale de 120N/mm² ;

Lorsque pièce femelle 5 de la borne est en aluminium type 1050, on peut faire la sélection avantageuse suivante :
- pour la pièce femelle 5, un grade en aluminium 1050 à l'état écroui type H14, H16 ou H18, ce qui se traduit pour l'état H14 par une résistance à la rupture supérieure à 105N/mm² avec une limite élastique supérieure à 85N/mm²;
- pour la bille 7, un grade en aluminium à l'état 0 avec recuit qui se traduit par une résistance à la rupture comprise entre 65 et 95 N/mm² avec une limite élastique maximale à 40-50N/mm².

Selon une variante avantageuse, on peut aussi accentuer la différence de résistance mécanique entre la bille 7 et l'embase de la pièce femelle 5.

Pour ce faire, on peut, en fonction du diamètre de bille 7, augmenter plus ou moins l'épaisseur E de paroi de l'embase entre l'extrémité inférieure du passage débouchant 53 et l'extrémité inférieure du chanfrein 54.

Le tableau 1 ci-dessous donne des valeurs préférées de cette épaisseur E en fonction du diamètre extérieur Ø de la bille 7.

**TABLEAU 1**

| | | | | |
|---|---|---|---|---|
| Diamètre extérieur Ø de la bille 7 (mm) | 1,8 à 2,4 | 2,4 à 2,8 | 2,8 à 3,3 | 3,3 à 4 |
| Epaisseur E de paroi de l'embase de la pièce femelle 5 (mm) | 2,0 à 3,0 | 3 à 3,5 | 3,5 à 4 | 4 à 5 |

Afin d'être compatible avec les dimensions et encombrement usuels et souhaités pour une traversée 1 d'accumulateur métal-ion, le ressort 8 présente avantageusement de faibles dimensions, typiquement un diamètre extérieur inférieur ou égal à 4 mm et une longueur à l'état libre inférieure ou égal à 8 mm.

Le ressort de compression 8 est de préférence en acier inoxydable de grade AISI 316 - 316L, ou éventuellement AISI 304 -304L qui ont également pour avantage d'être des grades largement utilisés et compatibles avec l'électrochimie d'un accumulateur Li-ion.

A titre d'exemple indicatif, le ressort de compression 8 peut être un des ressorts à base de fil en acier inox 316 commercialisé par la société SPEC.

Ainsi, de préférence, pour un diamètre D1 de la portion cylindrique 41 de l'ordre de 6mm, on peut avantageusement choisir un ressort de la société SPEC dont les caractéristiques sont résumées dans le tableau 2 ci-dessous :

**TABLEAU 2**

| Références commerciales | C0088-008-0190X |
|---|---|
| Matériau | Acier inoxydable 316 |
| Raideur R (N/mm) | 0,51 |
| Diamètre extérieur (mm) | 2,24 |
| Diamètre du fil (mm) | 0,2 |
| Longueur à l'état libre (mm) | 4,83 |

De préférence également, pour un diamètre D1 de la portion cylindrique 41 de compris entre 7 et 8mm, on peut avantageusement choisir un ressort de la société SPEC dont les caractéristiques sont résumées dans le tableau 3 ci-dessous :

**TABLEAU 3**

| Références commerciales | C0120-008-0190X |
|---|---|
| Matériau | Acier inoxydable 316 |
| Raideur R (N/mm) | 0,47 |
| Diamètre extérieur (mm) | 3,05 |
| Diamètre du fil (mm) | 0,25 |
| Longueur à l'état libre (mm) | 6,35 |

Pour réaliser un accumulateur avec une traversée 1 intégrant le dispositif de libération des gaz selon l'invention, on réalise les étapes suivantes.

On insère à travers l'orifice 32, depuis chacune des deux faces 30, 31 du couvercle 3, une des portions de guidage des rondelles 6A, 6B de sorte qu'elles soient en appui contre le bord de l'orifice 32.

On insère, depuis la face inférieure 31 du couvercle 3, la pièce femelle 5 dans la rondelle inférieure 6B.

On vient déposer la bille 7 à l'intérieur de la pièce femelle 5 de façon à ce qu'elle vienne se caler sur le chanfrein 54 selon l'axe X du passage débouchant 53.

On place alors le ressort de compression 8 dans le logement 43 de la pièce mâle 4. Le ressort 8 vient s'encliqueter par l'une de ses extrémités dans le fond du logement 43 au niveau du rétreint 5, tandis que l'autre de ses extrémités fait saillie au-delà de la portion cylindrique 41 de la pièce mâle 4 (figure 5A).

On emmanche à force la pièce mâle 4, depuis la face supérieure 30 opposée à la face inférieure 31 du couvercle 3. L'emmanchement à force permet d'avoir chacune des portions d'appui 40, 50 des pièces mâle 4 et femelle 5 en appui surfacique avec pression contre une portion d'appui des rondelles 6A, 6B elle-même en appui avec pression contre le bord de l'orifice 32 (figure 5B). En outre, la pièce femelle 5 est en appui avec pression contre les portions de guidage des rondelles 6A, 6B, elles-mêmes en appui surfacique avec pression contre le bord de l'orifice 32. De préférence, on applique un effort d'emmanchement à force au moins égal à 1 Tonne-force pour obtenir d'une part une étanchéité entre pièces 4, 5, rondelles 6A, 6B et couvercle 3 et d'autre part un serrage mécanique à froid très résistant entre pièces mâle 4 et femelle 5.

A la fin de cette étape, le niveau d'étanchéité obtenu est déjà élevé. Avec les constituants précités, on peut assurer un niveau compris entre 10⁻⁵ et 10⁻⁷ mbar.l/s testé à l'hélium. Ce niveau d'étanchéité est suffisant pour réaliser l'étape de formation électrique d'un accumulateur métal-ion.

L'assemblage des différents constituants de la traversée selon l'invention est alors finalisé.

On réalise l'ensemble des étapes usuelles d'assemblage d'un accumulateur métal-ion, comme suit :
- on insère à l'intérieur d'une enveloppe latérale de boitier, un faisceau électrochimique comprenant au moins une cellule enroulée sur elle-même, chaque cellule étant constitué d'une cathode, d'une anode et d'un film-séparateur intercalé entre anode-cathode ;
- on réalise les connexions électrique d'une part entre une extrémité du faisceau électrochimique et le boitier de l'accumulateur correspondant à une des polarités, par exemple la polarité positive, et d'autre part entre l'autre extrémité du faisceau et la borne-traversée 1 de paroi du couvercle 3 de l'accumulateur selon l'invention, qui correspond à l'autre des polarités, par exemple la polarité négative) ;

- on ferme de manière étanche le boitier de l'accumulateur ;
- on remplit l'intérieur de l'accumulateur avec un électrolyte liquide par un trou de remplissage prévu à cet effet, par exemple sur le couvercle 3 du boitier de l'accumulateur. Ce trou de remplissage est ensuite refermé afin de disposer d'un boitier d'accumulateur parfaitement étanche.

L'accumulateur selon l'invention étant assemblé, on peut alors procéder à l'étape de formation électrique par branchement électrique de ses bornes positive et négative sur un équipement connu.

Pour ce faire, les premiers cycles de charge et décharge sont réalisées en faisant passer un courant de charge ou décharge au travers des deux bornes de polarité négative et positive de l'accumulateur.

Comme évoqué en préambule de cette demande, pendant cette étape de formation électrique, qui peut atteindre une durée jusqu'à 48 à 72 heures, il peut se produire une élévation de pression interne, le plus généralement observée au cours du premier cycle de charge.

Avant cette élévation de pression, le niveau d'étanchéité obtenu précédemment, de l'ordre de 10⁻⁵ et 10⁻⁷ mbar.l/s sous hélium est suffisant car, à priori, l'air ou l'humidité ambiante ne peut s'introduire dans l'accumulateur.

Grâce au dispositif de libération des gaz avec bille 7 et ressort 8, comme détaillé ci-avant, les gaz en surpression vont vaincre l'effort du ressort 8 et ainsi soulever la bille 7 et par-là pouvoir être libérés vers l'extérieur au travers respectivement du trou fileté 42, le logement 43, les passages débouchant 44 et 53.

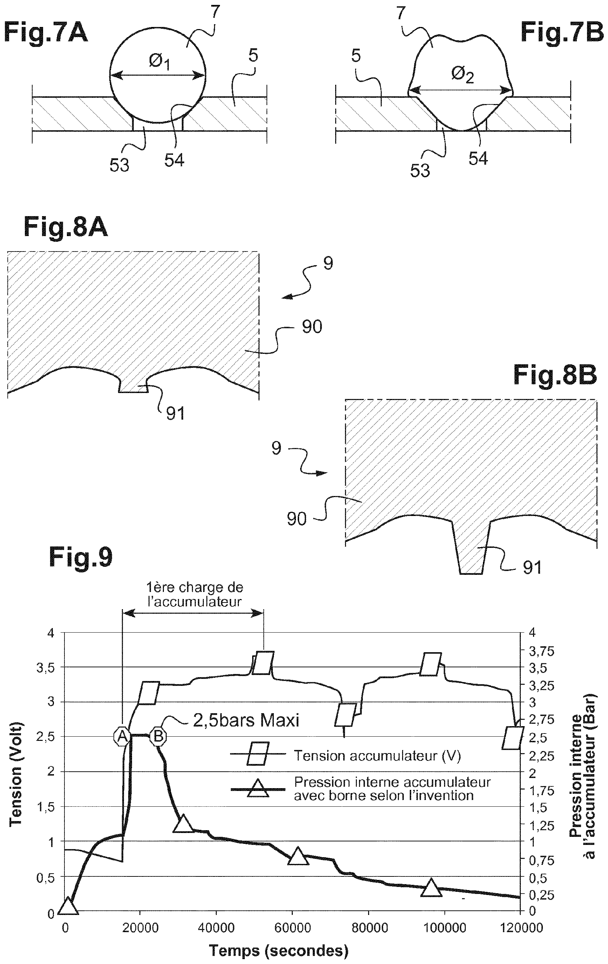

On a illustré en figure 9, sous la forme de graphes, le résultat d'essais réalisés pour un accumulateur Li-ion selon l'invention, de format cylindrique de type 50-125 avec une électrochimie de type LiFePO₄ / Graphite, la bille 7, le ressort de compression 8 étant réalisés dans les matériaux et avec les dimensions précités.

A la lecture de la courbe de pression interne à l'accumulateur, on voit que :
- lorsque la pression interne atteint la pression d'échappement à partir de laquelle la bille 7 peut être soulevée de son siège 54, environ 2,5 bars au point A dans l'exemple illustré, du gaz va s'échapper de l'intérieur de l'accumulateur tant qu'il y a génération de gaz à l'intérieur de l'accumulateur.
- puis la bille 7 vient se refermer sur son siège, à partir du point B dans l'exemple illustré, lorsque cette génération de gaz s'arrête.

En dernière étape, en sortie de formation électrique, on prévoit avantageusement une étape de déformation plastique de la bille 7 qui va permettre de garantir durablement un niveau d'étanchéité à l'accumulateur de valeur au moins supérieure à 10⁻⁸ mbar.l/s sous hélium comme expliqué par la suite.

Cette dernière étape est illustrée en figure 5C: on insère un outil de pressage 9 dans l'axe X de la pièce mâle 4 de la borne 1, puis on visse le corps fileté 90 de cet outil 9 dans le trou fileté 42 de la borne 1.

Le corps fileté 90 est prolongé d'une extrémité cylindrique 91 qui s'introduit au centre des spires du ressort lors du vissage du corps 90 dans le trou fileté 42 jusqu'à ce cette extrémité 91 vienne au contact du dôme supérieur de la bille 7.

Comme symbolisé par la flèche F sur la figure 5C, lors du vissage un effort de pressage est transmis par l'extrémité 91 de l'outil pour presser la bille 7 contre le chanfrein 54 et ainsi provoquer la déformation de cette dernière. La déformation vient déplacer progressivement le volume de matière de la bille 7 afin d'écraser ses faces en interface avec l'entrée du chanfrein 54. Une déformation plastique de la bille 7 est alors obtenue.

Cette déformation irréversible de la bille 7 permet de faire coïncider sur une grande longueur les surfaces en vis-à-vis de la bille 7 et du profil chanfreiné 54 en extrémité du passage débouchant 53 de l'embase de la pièce femelle 5 et par conséquent de colmater les possibles chemins de fuite de gaz qui auraient pu exister avant réalisation de l'opération de pressage par l'outil 9.

L'évolution de la forme de la bille 7 lors de son pressage est montrée respectivement aux figures 7A et 7B : la bille 7 initialement parfaitement sphérique, a son diamètre qui augmente progressivement à l'entrée chanfreinée 54 du passage débouchant 53 de la pièce femelle 54 par déplacement de sa matière du centre vers l'extérieur sous l'effort de pressage F de l'outil 9.

Le diamètre de la bille 7 à l'entrée chanfreinée 54 passe ainsi d'une valeur Ø₁ (figure 7A) à une valeur supérieure Ø₂ (figure 7B) dans son état déformé plastiquement. Comme on peut le voir en figure 7B, la surface de contact entre la bille 7 déformée plastiquement et l'entrée du passage débouchant 53 a augmenté par rapport au contact surfacique initial entre la bille sphérique non déformée 7 et le chanfrein 54.

Les figures 8A et 8B montrent deux exemples de profils différents 91 en bout de l'outil de pressage 9 de la bille. Ces profils d'extrémité 91 sont avantageusement axisymétriques pour appliquer un appui à 360° à partir du sommet de la bille 7. La partie centrale de l'outil 9 qui est dans le prolongement du corps 90 peut avoir une longueur plus ou moins longue. On privilégie de préférence la partie centrale la plus courte dans le cas d'une bille 7 en matériau plus dur (figure 8A), comme par exemple lorsque la bille 7 est en cuivre. La partie centrale la plus longue est plutôt privilégiée dans le cas d'une bille 7 en matériau plus mou (figure 8B), comme par exemple lorsque la bille 7 est en aluminium.

Lors de l'étape de déformation plastique de la bille 7, on peut prévoir avantageusement de réaliser un nettoyage de la surface supérieure de la borne-traversée 1 de l'accumulateur, afin d'éliminer les éventuelles traces et résidus de pollutions induits par le dégazage au cours de l'étape de formation électrique.

On décrit maintenant un exemple de dimensionnement de traversée 1 qui vient d'être décrite avec un dispositif de libération des gaz à bille 7/ressort de compression 8 pour permettre d'échapper les gaz internes à l'accumulateur lorsque ceux-ci induisent une pression autour de 2,5 à 3 bars.

La plage de pressions de fonctionnement attendue entre la pression inférieure P1 et la pression supérieure P2 est déterminée par calcul à partir des dimensions des différents constituants sélectionnés pour réaliser le dispositif de libération des gaz.

Le ressort de compression 8 choisi est celui commercialisé par la société SPEC dont les caractéristiques sont indiquées dans le tableau 2 ci-dessus.

La bille 7 sélectionnée est une bille en cuivre Cu-Al de diamètre extérieur Ø₁ égal à 2,4 mm. Après déformation plastique, le diamètre extérieur Ø₂ est égal au minimum à 2,5 mm.

Le diamètre du passage débouchant 53 percé au travers de l'embase de la pièce femelle 5 est égal à 1,4 mm.

L'embase de la pièce femelle 5 est en cuivre Cu-Al nickelé avec une épaisseur moyenne de 3,0 mm.

La bille 7 est positionnée dans l'axe X du passage débouchant 53 et vient s'autocentrer sur le profil 54 obtenu par un chanfrein de valeur entre 0,4 à 0,6 mm à 45°.

L'extrémité du logement alésé 43 de la pièce mâle 4, comprend un chanfrein dont la valeur est entre 0,25 à 0,4 mm à 60°.

On détermine maintenant la côte de profondeur L₃ du logement 43 du ressort 8. Cette profondeur ou hauteur L₃ est égale à la somme de la longueur Lx du ressort 8 à l'état comprimé et de la partie de bille 7 en surépaisseur au-dessus du plan intérieur à la pièce femelle 5. Les côtes L₃ et Lx sont clairement visibles en figure 6.

Dans l'exemple présenté, compte-tenu du diamètre extérieur de la bille sphérique 7 et de la valeur du chanfrein 54, on peut considérer que la surface S de la bille 7 sur laquelle s'appliquera la pression interne des gaz P, est environ de 1,85 mm².

On peut donc en déduire les efforts respectifs Fn correspondants à différents niveaux de pression appliqués de P1 à P5 entre 2,5 bars et 4,5 bars en appliquant la formule Fn= P x S.

Le tableau 4 ci-dessous synthétise les efforts.

**TABLEAU 4**

| Pressions | P1 | P2 | P3 | P4 | P5 |
|---|---|---|---|---|---|
| Valeurs de pression (bars) | 2,5 | 3,0 | 3,5 | 4,0 | 4,5 |
| Efforts appliqués (N) | 0,462 | 0,554 | 0,647 | 0,739 | 0,831 |

Le tableau 5 ci-dessous indique pour chacun des efforts appliqués, les longueurs xn de compression du ressort 8 à partir de la formule Fn = R^{∗} xn (R étant la raideur du ressort) ainsi que les longueurs Lxn de ressort comprimé, à partir de la formule Lxn = Lo - xn (Lo étant la longueur du ressort à l'état libre).

**TABLEAU 5**

| | | | | | |
|---|---|---|---|---|---|
| Longueur xn de compression du ressort 8 (mm) | x1 | x2 | x3 | x4 | x5 |
| | 0,906 | 1,087 | 1,268 | 1,449 | 1,630 |
| Longueur Lxn du ressort 8 comprimé (mm) | Lx1 | Lx2 | Lx3 | Lx4 | Lx5 |
| | 3,924 | 3,743 | 3,562 | 3,381 | 3,200 |

Compte tenu des résultats obtenus pour Lx1 et Lx2, on peut définir une longueur comprimé (Lx) moyenne de ce type de ressort 8 égale à 3,85 mm avec une tolérance de +/ - 0,1 mm.

Avec ces hypothèses, et avec une bille 7 de diamètre égal à 2,4 mm et les dimensions du ressort 8 choisies, la hauteur L₃ du logement 43 du ressort 8 à prévoir dans la partie alésée de la pièce mâle 8 doit être comprise entre 3,8 mm et 4,3 mm.

La pression de fonctionnement de la bille 7 avec son ressort 8, c'est-à-dire la pression qui permet de la soulever de son siège 54 afin de permettre le dégazage de l'intérieur de l'accumulateur, est donc comprise entre une valeur minimale P1 de l'ordre de 2,3 bars et une valeur maximale P2 de l'ordre de 3,1 bars.

La traversée 1 intégrant le dispositif de libération de gaz à bille 7, ressort 8 selon l'invention peut être réalisée sur un couvercle 3 de boitier 10 d'accumulateur Li-ion aussi bien selon une géométrie cylindrique, que selon une géométrie prismatique. Dans ces différentes configurations, la borne 1 selon l'invention est par exemple négative, la borne positive 2 pouvant être réalisée, par exemple directement par soudure, également sur le couvercle 3, comme illustré en figures 1 et 2.

Bien que non précisé auparavant, on s'assure que la base (embase) de la pièce femelle 5, c'est-à-dire la section qui définit sa surface d'appui, présente une surface suffisante pour pouvoir relier électriquement une connectique interne au boitier et elle-même reliée électriquement au faisceau électrochimique usuellement appelé bobineau, constitué d'une ou plusieurs cellules électrochimiques. On peut réaliser la liaison électrique entre connectique interne et embase de la pièce femelle par soudage.

D'autres avantages et améliorations peuvent être prévus sans pour autant sortir du cadre de l'invention.

L'invention n'est pas limitée aux exemples qui viennent d'être décrits ; on peut notamment combiner entre elles des caractéristiques des exemples illustrés au sein de variantes non illustrées.

L'expression « comportant un » ou « comprenant un » doit être comprise comme étant synonyme de « comportant au moins un », sauf si le contraire est spécifié.

## Revendications

1. Traversée (1) formant borne pour accumulateur électrochimique métal-ion, réalisée à travers un orifice (32) débouchant de part et d'autre d'une paroi (3) comportant deux faces opposées (30, 31), comportant:
- un moyen de fermeture (7), en appui contre le chanfrein (54) d'au moins un passage débouchant formant un siège à l'intérieur de la traversée,
- un moyen de compression (8) logé dans le conduit débouchant, le moyen de compression étant adapté pour maintenir appuyé le moyen de fermeture contre son siège selon une surface continue périphérique, jusqu'à une pression prédéterminée des gaz régnant à l'intérieur de l'accumulateur, au-delà de laquelle ceux-ci peuvent s'échapper vers l'extérieur de l'accumulateur au travers du passage et du conduit débouchant,
le moyen de fermeture étant une bille (7), le moyen de compression étant adapté d'une part pour laisser passer l'extrémité d'un outil (9) de sorte à permettre une déformation plastique initiale de la bille par pressage contre son siège (54) et d'autre part pour maintenir appuyée la bille déformée contre son siège jusqu'à la pression prédéterminée des gaz régnant à l'intérieur de l'accumulateur, au-delà de laquelle ceux-ci peuvent s'échapper vers l'extérieur de l'accumulateur.

2. Traversée selon la revendication 1, comportant:
- deux rondelles (6A, 6B) électriquement isolantes, comportant chacune une portion d'appui en appui surfacique avec pression contre l'une (30, 31) des faces de la paroi et une portion de guidage en saillie par rapport à la portion d'appui et en contact avec le bord de l'orifice (32),
- deux pièces (4, 5) électriquement conductrices, une portion (41) de la pièce mâle (4) étant ajustée serrée dans une portion alésée (51) de la pièce femelle (5), chacune des pièces conductrices comportant une portion d'appui (40, 50) en appui surfacique avec pression contre une portion d'appui des rondelles, le fond de la portion alésée étant percé du passage débouchant (53) avec un chanfrein (54), la portion ajustée de la pièce mâle comprenant le conduit débouchant (42, 43, 44) à la fois à l'extérieur de l'accumulateur et en regard du passage débouchant de la pièce femelle,

3. Traversée selon la revendication 1 ou 2, le moyen de compression étant un ressort de compression (8), de préférence en acier inoxydable de grade AISI 316 ou 316L, ou encore de grade AISI 304 ou 304L.

4. Traversée selon l'une des revendications 2 ou 3, la pièce femelle étant en un grade de cuivre Cu-Al, à l'état écroui type H14 tandis que la bille est en un grade de cuivre Cu-Al, à l'état 0, ou en alliage d'aluminium de grade 1050 à l'état écroui type H14, H16 ou H18, tandis que la bille est en un grade en aluminium à l'état recuit type 0.

5. Traversée (1) selon l'une des revendications 2 à 4, la pièce mâle étant en alliage à base de cuivre, de préférence en cuivre électrolytique CuAl ou en cuivre nickelé, ou en alliage à base d'aluminium, de préférence un grade 5754.

6. Traversée (1) selon l'une des revendications précédentes, le chanfrein du passage débouchant formant le siège étant un chanfrein conique, de préférence à 45°.

7. Traversée (1) selon l'une des revendications 2 à 9, le conduit débouchant comprenant un trou taraudé (42) central de la pièce mâle.

8. Batterie ou accumulateur métal-ion comportant un boitier (10) avec un couvercle (3) à travers lequel une traversée (1) selon l'une quelconque des revendications 2 à 7 est réalisée.

9. Batterie ou accumulateur métal-ion selon la revendication 8, la pièce mâle (4) étant de type filetée intérieurement et fait saillie vers l'extérieur du boitier (10).

10. Batterie ou accumulateur Li-ion selon l'une des revendications 8 ou 9, la pièce femelle de la traversée étant en alliage d'aluminium et soudée à un collecteur de courant à base d'aluminium lui-même soudé à un feuillard d'électrode à base d'aluminium supportant un matériau actif d'insertion d'ions métal, de préférence choisi parmi un matériau à base de titanate, tel que l'oxyde de titanate de lithium Li₄TiO₅O₁₂, un matériau à base de silicium, un matériau à base de sodium.

11. Batterie ou accumulateur Li-ion selon l'une des revendications 8 ou 9, la pièce femelle de la traversée étant à base de cuivre Cu-Al et soudée à un collecteur de courant à base de cuivre lui-même soudé à un feuillard d'électrode à base de cuivre supportant un matériau actif d'insertion d'ions métal, de préférence choisi parmi un matériau à base de titanate, tel que l'oxyde de titanate de lithium Li₄TiO₅O₁₂, un matériau à base de silicium, un matériau à base de sodium.

12. Procédé de réalisation d'une traversée selon l'une quelconque des revendications 1 à 7, selon lequel on réalise les étapes suivantes :
a/ insertion à travers l'orifice (32), depuis chacune des deux faces (30, 31) opposées de la paroi (3), d'une des portions de guidage des rondelles (6A, 6B), de sorte qu'elles soient en appui contre le bord de l'orifice (32) de la paroi ;
b/ insertion, depuis une face (31) de la paroi, de la pièce femelle en aluminium (5) dans une des rondelles (6B);
c/ logement du moyen de fermeture (7) dans l'axe (X) du passage débouchant (53) à l'intérieur de la portion alésée (51) de la pièce femelle (5) de sorte qu'il vienne se caler en appui surfacique sur le chanfrein (54) en extrémité du passage débouchant;
d/ logement du moyen de compression (8) dans une partie (43) du conduit débouchant de la pièce mâle (4) formant un logement, de sorte que l'une des extrémités du moyen de compression est en butée ou maintenue au fond du logement tandis que l'autre des extrémités fait saillie au-delà de la portion à ajuster (41) de la pièce mâle (4) ;
e/ emmanchement à force, depuis la face opposée (30) de la paroi, de la pièce mâle (4), de sorte que la portion ajustée (41) de la pièce mâle (4) soit en butée contre le fond (52) de la portion alésée (51) de la pièce femelle (5) et que chacune des portions d'appui (40, 50) des pièces mâle et femelle est en appui surfacique avec pression contre une portion d'appui des rondelles elle-même guidée contre le bord de l'orifice.

13. Procédé selon la revendication 12, l'emmanchement selon l'étape e/ étant réalisé sous presse avec un effort supérieur ou égal à 1 tonne-force de sorte à obtenir un ajustement de type N9p7 entre portion ajustée (41) de pièce mâle (4) et portion alésée (51) de pièce femelle (5), en particulier pour un diamètre d'alésage de la portion alésée de la pièce femelle de l'ordre de 6mm.

14. Procédé selon la revendication 12 ou 13, comprenant après l'étape e/ les étapes suivantes :
f/ ensemble des étapes d'assemblage de l'accumulateur et de son boitier (10), comprenant :
f1/ insertion à l'intérieur d'une enveloppe latérale de boitier, d'un faisceau électrochimique comprenant au moins une cellule enroulée sur elle-même, chaque cellule étant constitué d'une cathode, d'une anode et d'un film-séparateur intercalé entre anode-cathode ;
f2/ réalisation des connexions électrique d'une part entre une extrémité du faisceau électrochimique et le boitier de l'accumulateur correspondant à une des polarités, et d'autre part entre l'autre extrémité du faisceau et la traversée (1) ;
f3/ fermeture étanche du boitier de l'accumulateur ;
f4/ remplissage de l'intérieur de l'accumulateur avec un électrolyte liquide ou gel par un trou de remplissage dans le boitier de l'accumulateur puis fermeture étanche du trou de remplissage ;
g/ branchement électrique des bornes positive et négative de l'accumulateur afin de réaliser sa formation électrique.

15. Procédé selon la revendication 14, le moyen de fermeture étant une bille, comprenant, une fois l'étape g/ de formation électrique de l'accumulateur achevée, l'étape suivante :
h/ insertion depuis l'extérieur de l'accumulateur dans le conduit débouchant de la pièce mâle (4) d'un outil de pressage (9) au travers du moyen de compression de sorte à déformer plastiquement la bille en appui contre son siège (54).

## Patentansprüche

1. Poldurchführung (1) als Anschlussklemme für einen elektrochemischen Metall-Ionen-Akkumulator, die durch eine durchgängige Öffnung (32) beidseits einer Wand (3) ausgeführt ist, die zwei entgegengesetzte Seiten (30, 31) umfasst, umfassend:
- ein Verschließmittel (7), das an der Abschrägung (54) mindestens eines durchgängigen Durchlasses in Anlage ist, der einen Sitz im Innern der Poldurchführung bildet,
- ein Druckmittel (8), das in dem durchgängigen Kanal angeordnet ist, wobei das Druckmittel geeignet ist, das Verschließmittel entlang einer kontinuierlichen Umfangsfläche an seinen Sitz angelegt zu halten bis zu einem vorbestimmten, im Innern des Akkumulators herrschenden Druck der Gase, jenseits dessen diese durch den Durchlass und den durchgängigen Kanal nach außerhalb des Akkumulators entweichen können,
wobei das Verschließmittel eine Kugel (7) ist, wobei das Druckmittel geeignet ist, zum einen das Ende eines Werkzeugs (9) durchzulassen, so dass eine anfängliche plastische Verformung der Kugel durch Pressen gegen ihren Sitz (54) ermöglicht wird, und zum anderen die verformte Kugel an ihren Sitz angelegt zu halten bis zu dem vorbestimmten, im Innern des Akkumulators herrschenden Druck der Gase, jenseits dessen diese nach außerhalb des Akkumulators entweichen können.

2. Poldurchführung nach Anspruch 1, umfassend:
- zwei elektrisch isolierende Scheiben (6A, 6B), die jeweils einen Anlageabschnitt, der in Flächenanlage mit Druck an einer (30, 31) der Seiten der Wand ist, und einen Führungsabschnitt, der in Bezug auf den Anlageabschnitt herausragt und in Kontakt mit dem Rand der Öffnung (32) ist, umfassen,
- zwei elektrisch leitende Teile (4, 5), wobei ein Abschnitt (41) des Steckteils (4) in einen aufgebohrten Abschnitt (51) des Aufnahmeteils (5) pressgepasst ist, wobei jedes der leitenden Teile einen Anlageabschnitt (40, 50) umfasst, der in Flächenanlage mit Druck an einem Anlageabschnitt der Scheiben ist, wobei der Boden des aufgebohrten Abschnitts von dem durchgängigen Durchlass (53) mit einer Abschrägung (54) durchbohrt ist, wobei der eingepasste Abschnitt des Steckteils den durchgängigen Kanal (42, 43, 44) sowohl außerhalb des Akkumulators als gegenüber dem durchgängigen Durchlass des Aufnahmeteils umfasst.

3. Poldurchführung nach Anspruch 1 oder 2, wobei das Druckmittel eine Druckfeder (8) ist, bevorzugt aus nichtrostendem Stahl der Sorte AISI 316 oder 316L oder aber der Sorte AISI 304 oder 304L.

4. Poldurchführung nach einem der Ansprüche 2 oder 3, wobei das Aufnahmeteil aus einer Kupfersorte Cu-Al im kaltverfestigten Zustand vom Typ H14 ist, während die Kugel aus einer Kupfersorte Cu-Al im Zustand 0 ist, oder aus einer Aluminiumlegierung der Sorte 1050 im kaltverfestigten Zustand vom Typ H14, H16 oder H18 ist, während die Kugel aus Aluminium im geglühten Zustand vom Typ 0 ist.

5. Poldurchführung (1) nach einem der Ansprüche 2 bis 4, wobei das Steckteil aus einer Legierung auf Kupferbasis ist, bevorzugt aus Elektrolytkupfer CuAl oder aus vernickeltem Kupfer, oder aus einer Legierung auf Aluminiumbasis, bevorzugt einer Sorte 5754.

6. Poldurchführung (1) nach einem der vorhergehenden Ansprüche, wobei die den Sitz bildende Abschrägung des durchgängigen Durchlasses eine konische Abschrägung ist, bevorzugt mit 45°.

7. Poldurchführung (1) nach einem der Ansprüche 2 bis 9, wobei der durchgängige Kanal ein zentrales Loch mit Gewinde (42) des Steckteils umfasst.

8. Metall-Ionen-Batterie oder -Akkumulator, umfassend ein Gehäuse (10) mit einem Deckel (3), durch den hindurch eine Poldurchführung (1) nach einem der Ansprüche 2 bis 7 ausgeführt ist.

9. Metall-Ionen-Batterie oder -Akkumulator nach Anspruch 8, wobei das Steckteil (4) vom Typ mit Innengewinde ist und nach außerhalb des Gehäuses (10) herausragt.

10. Li-Ionen-Batterie oder -Akkumulator nach einem der Ansprüche 8 oder 9, wobei das Aufnahmeteil der Poldurchführung aus einer Aluminiumlegierung ist und an einen Stromkollektor auf Aluminiumbasis geschweißt ist, der wiederum an ein Elektrodenband auf Aluminiumbasis geschweißt ist, das ein aktives Metallioneneinlagerungsmaterial trägt, das bevorzugt unter einem Material auf Titanatbasis wie dem Lithiumtitanatoxid Li₄TiO₅O₁₂, einem Material auf Siliciumbasis, einem Material auf Natriumbasis gewählt ist.

11. Li-Ionen-Batterie oder -Akkumulator nach einem der Ansprüche 8 oder 9, wobei das Aufnahmeteil der Poldurchführung auf der Basis von Kupfer Cu-Al ist und an einen Stromkollektor auf Kupferbasis geschweißt ist, der wiederum an ein Elektrodenband auf Kupferbasis geschweißt ist, das ein aktives Metallioneneinlagerungsmaterial trägt, das bevorzugt unter einem Material auf Titanatbasis wie dem Lithiumtitanatoxid Li₄TiO₅O₁₂, einem Material auf Siliciumbasis, einem Material auf Natriumbasis gewählt ist.

12. Verfahren zur Herstellung einer Poldurchführung nach einem der Ansprüche 1 bis 7, gemäß dem die folgenden Schritte ausgeführt werden:
a/ Einführen eines der Führungsabschnitte der Scheiben (6A, 6B) von jeder der beiden entgegengesetzten Seiten (30, 31) der Wand (3) aus durch die Öffnung (32) hindurch, so dass sie am Rand der Öffnung (32) der Wand in Anlage sind;
b/ Einführen des Aufnahmeteils aus Aluminium (5) in eine der Scheiben (6B) von einer Seite (31) der Wand aus;
c/ Anordnen des Verschließmittels (7) in der Achse (X) des durchgängigen Durchlasses (53) im Innern des aufgebohrten Abschnitts (51) des Aufnahmeteils (5), so dass es in Flächenanlage an der Abschrägung (54) am Ende des durchgängigen Durchlasses festsitzt;
d/ Anordnen des Druckmittels (8) in einem Teil (43) des durchgängigen Kanals des Steckteils (4), der eine Aufnahme bildet, so dass eines der Enden des Druckmittels am Boden der Aufnahme im Anschlag ist oder gehalten wird, während das andere der Enden über den einzupassenden Abschnitt (41) des Steckteils (4) hinaus herausragt;
e/ Einstecken des Steckteils (4) unter Krafteinwirkung von der entgegengesetzten Seite (30) der Wand aus, so dass der eingepasste Abschnitt (41) des Steckteils (4) im Anschlag am Boden (52) des aufgebohrten Abschnitts (51) des Aufnahmeteils (5) ist und jeder der Anlageabschnitte (40, 50) des Steck- und des Aufnahmeteils in Flächenanlage mit Druck an einem Anlageabschnitt der Scheiben ist, der wiederum gegen den Rand der Öffnung geführt wird.

13. Verfahren nach Anspruch 12, wobei das Einstecken gemäß Schritt e/ unter einer Presse mit einer Kraft von 1 Tonne-Kraft oder mehr ausgeführt wird, so dass eine Passung vom Typ N9p7 zwischen eingepasstem Abschnitt (41) des Steckteils (4) und aufgebohrtem Abschnitt (51) des Aufnahmeteils (5) erhalten wird, insbesondere für einen Bohrungsdurchmesser des aufgebohrten Abschnitts des Aufnahmeteils in der Größenordnung von 6 mm.

14. Verfahren nach Anspruch 12 oder 13, umfassend nach dem Schritt e/ die folgenden Schritte:
f/ Gesamtheit der Schritte zum Zusammenfügen des Akkumulators und seines Gehäuses (10), umfassend:
f1/ Einführen eines elektrochemischen Bündels, das mindestens eine aufgerollte Zelle umfasst, wobei jede Zelle aus einer Kathode, einer Anode und einem zwischen Anode und Kathode eingefügten Trennfilm besteht, in den Innenraum einer seitlichen Gehäusehülle;
f2/ Herstellen der elektrischen Anschlüsse zum einen zwischen einem Ende des elektrochemischen Bündels und dem Gehäuse des Akkumulators, entsprechend einer der Polaritäten, und zum anderen zwischen dem anderen Ende des Bündels und der Poldurchführung (1);
f3/ dichtes Verschließen des Gehäuses des Akkumulators;
f4/ Füllen des Innenraums des Akkumulators mit einem flüssigen oder gelförmigen Elektrolyten durch ein Einfüllloch im Gehäuse des Akkumulators, dann dichtes Verschließen des Einfülllochs;
g/ elektrisches Anschließen der positiven und negativen Anschlussklemmen des Akkumulators, um seine Strombildung auszuführen.

15. Verfahren nach Anspruch 14, wobei das Verschließmittel eine Kugel ist, umfassend, sobald der Schritt g/ der Strombildung des Akkumulators abgeschlossen ist, den folgenden Schritt:
h/ Einführen eines Presswerkzeugs (9) durch das Druckmittel hindurch von außerhalb des Akkumulators in den durchgängigen Kanal des Steckteils (4), so dass die an ihrem Sitz (54) anliegende Kugel plastisch verformt wird.

## Claims

1. Terminal-forming bushing (1) for metal-ion electrochemical cell, produced through an orifice (32) emerging on either side of a wall (3) comprising two opposing faces (30, 31), comprising:
- a closure means (7), bearing against the chamfer (54) of at least one emerging passage forming a seat inside the bushing,
- a compression means (8) housed in the emerging conduit, the compression means being adapted to keep the closure means pressed against its seat on a continuous peripheral surface, up to a predetermined pressure of the gases prevailing inside the cell, beyond which the latter can escape to the outside of the cell through the passage and the emerging conduit,
- the closure means being a ball (7), the compression means being adapted on the one hand to allow the passage of the end of a tool (9) so as to allow an initial plastic deformation of the ball by pressing against its seat (54) and, on the other hand, to keep the deformed ball pressed against its seat up to the predetermined pressure of the gases prevailing inside the cell, beyond which the latter can escape toward the outside of the cell.

2. Bushing according to Claim 1, comprising:
- two electrically insulating washers (6A, 6B), each comprising a bearing portion surface-bearing with pressure against one (30, 31) of the faces of the wall and a guiding portion protruding relative to the bearing portion and in contact with the edge of the orifice (32),
- two electrically conductive parts (4, 5), a portion (41) of the male part (4) being tight-fitted in a bored portion (51) of the female part (5), each of the conductive pieces comprising a bearing portion (40, 50) surface-bearing with pressure against a bearing portion of the washers, the bottom of the bored portion being pierced by the emerging passage (53) with a chamfer (54), the fitted portion of the male part comprising the conduit (42, 43, 44) emerging both outside the cell and facing the emerging passage of the female part.

3. Bushing according to Claim 1 or 2, the compression means being a compression spring (8), preferably made of stainless steel of grade AISI 316 or 316L, or even of grade AISI 304 or 304L.

4. Bushing according to one of Claims 2 and 3, the female part being made of a copper grade Cu-Al, in the H14-type cold-rolled state whereas the ball is made of a copper grade Cu-Al, in state 0, or of aluminium alloy of grade 1050 in the H14, H16 or H18-type cold-rolled state, whereas the ball is made of a grade of aluminium in the type 0 cold-rolled state.

5. Bushing (1) according to one of Claims 2 to 4, the male part being made of copper-based alloy, preferably of electrolytic copper (CuAl) or of nickel-plated copper, or aluminium-based alloy, preferably a grade 5754.

6. Bushing (1) according to one of the preceding claims, the chamfer of the emerging passage forming the seat being a tapered chamfer, preferably at 45°.

7. Bushing (1) according to one of Claims 2 to 9, the emerging conduit comprising a central tapped hole (42) of the male part.

8. Metal-ion battery or cell comprising a housing (10) with a cover (3) through which a bushing (1) according to any one of Claims 2 to 7 is produced.

9. Metal-ion battery or cell according to Claim 8, the male part (4) being of internally-threaded type and protruding outward from the housing (10).

10. Li-ion battery or cell according to one of Claims 8 and 9, the female part of the bushing being made of aluminium alloy and welded to an aluminium-based current collector which is itself welded to an aluminium-based electrode leaf supporting an active metal ion insertion material, preferably chosen from a titanate-based material, such as lithium titanate oxide Li₄TiO₅O₁₂, a silicon-based material, a sodium-based material.

11. Li-ion battery or cell according to one of Claims 8 and 9, the female part of the bushing being copper-based Cu-Al and welded to a copper-based current collector which is itself welded to a copper-based electrode leaf supporting an active metal ion insertion material, preferably chosen from a titanate-based material, such as lithium titanate oxide Li₄TiO₅O₁₂, a silicon-based material, a sodium-based material.

12. Method for producing a bushing according to any one of Claims 1 to 7, according to which the following steps are carried out:
a/ insertion through the orifice (32), from each of the two opposing faces (30, 31) of the wall (3), of one of the guiding portions of the washers (6A, 6B), such that they bear against the edge of the orifice (32) of the wall;
b/ insertion, from a face (31) of the wall, of the aluminium female part (5) into one of the washers (6B) ;
c/ housing of the closure means (7) in the axis (X) of the emerging passage (53) inside the bored portion (51) of the female part (5) such that it comes to be wedged surface-bearing on the chamfer (54) at the end of the emerging passage;
d/ housing of the compression means (8) in a part (43) of the emerging conduit of the male part (4) forming a housing, such that one of the ends of the compression means is in abutment or held at the bottom of the housing whereas the other of the ends protrudes beyond the portion (41) to be fitted of the male part (4);
e/ force-fitting, from the opposing face (30) of the wall, of the male part (4), such that the fitted portion (41) of the male part (4) is in abutment against the bottom (52) of the bored portion (51) of the female part (5) and that each of the bearing portions (40, 50) of the male and female parts is surface-bearing with pressure against a bearing portion of the washers which is itself guided against the edge of the orifice.

13. Method according to Claim 12, the fitting according to step e/ being carried out under pressure with a force greater than or equal to one tonne-force so as to obtain a fitting of N9p7 type between fitted portion (41) of the male part (4) and bored portion (51) of the female part (5), in particular for a bore diameter of the bored portion of the female part of the order of 6 mm.

14. Method according to Claim 12 or 13, comprising, after step e/, the following steps:
f/ all of the steps of assembly of the cell and of its housing (10), comprising:
f1/ insertion, into a lateral housing enclosure, of an electrochemical bundle comprising at least one cell wound on itself, each cell being composed of a cathode, of an anode, and of a separator film inserted between anode and cathode;
f2/ creation of the electrical connections on the one hand between an end of the electrochemical bundle and the housing of the cell corresponding to one of the polarities, and on the other hand between the other end of the bundle and the bushing (1);
f3/ tight closure of the housing of the cell;
f4/ filling of the interior of the cell with a liquid or gel electrolyte through a filling hole in the housing of the cell then tight closure of the filling hole;
g/ electrical connection to the positive and negative terminals of the cell in order to produce its electrical formation.

15. Method according to Claim 14, the closure means being a ball, comprising, once the step g/ of electrical formation of the accumulator is completed, the following step:
h/ insertion, from the outside of the cell into the emerging conduit of the male part (4), of a pressing tool (9) through the compression means so as to plastically deform the ball bearing against its seat (54).
